# EUROPEAN PATENT APPLICATION

(11) **EP 4 354 893 A1**
(43) Date of publication of application: **17.04.2024**
(21) Application number: 22201639.6
(22) Date of filing: 14.10.2022
(51) Int. Cl.: H04N 25/68

(54) **METHOD FOR IMAGE PROCESSING, DEVICE AND SOFTWARE**

(71) Applicant: Beijing Xiaomi Mobile Software Co., Ltd., Beijing 100085 (CN)
(72) Inventor: Ni, Xingyang, 33720 Tampere (FI); Lampinen, Lasse, 33720 Tampere (FI); Danielyan, Aram, 33720 Tampere (FI); Finnilä, Tapio, 33720 Tampere (FR)
(74) Representative: dompatent von Kreisler Selting Werner - Partnerschaft von Patent- und Rechtsanwälten mbB

(57) **Abstract**

Method and device for image processing. The method includes: Acquiring a first image comprising a plurality of pixels; Acquiring a coordinate of at least one defective pixel of the first image; Prefilling the first image by setting the at least one defective pixel to a pre-fixed value; Determining pixel value for the at least one defective pixel by a neural network; Outputting a second image by setting the pixel value of the at least one defective pixel to the determined pixel value.

## Description

### Technical field

The present invention relates to an image processing device and a method for image processing. More particularly, the present invention relates to a method for correcting defective pixels and an image processing device implementing such a method. Computer program and computer-readable medium are also provided.

### Background

Camera Image Signal Processing (ISP) aims to address the problem of mapping raw images to RGB images. It consists of manually defined procedures such as demosaicing, noise reduction, white balance, and color transform. Defect pixel correction is an essential procedure in any ISP. Due to defects in camera sensors, certain pixels in a raw image may not work correctly. A raw image file contains minimally processed data from the image sensor of either a digital camera, a motion picture film scanner, or other image scanners. Values of those defective pixels do not correspond to the actual scene, resulting in inferior image quality and poorer user experience. In an ISP pipeline, it is common to incorporate a procedure that detects and corrects the defective pixels. On the one hand, the detection algorithm recognizes the defective pixels, and it is a prerequisite for the subsequent correction algorithm. On the other hand, the correction algorithm fills in the defective pixels with reasonable values so that the defective pixels would be visually indistinguishable from the rest.

Both the detection and correction algorithms are required to handle the defective pixels. The detection algorithm outputs the coordinates of the defective pixels, while the correction algorithm estimates the pixel values afterwards.

However, there is always a need to improve the quality of image reconstruction while maintaining or reducing the required computational power.

### Summary

Therefore, it is an object of the present invention to provide a solution that aims to obtain a better reconstruction of an image while reducing the computational cost.

By the present invention, a method for processing an image according to claim 1 is provided, an image processing device is provided according to claim 5, a computer program is provided according to claim 6 and a computer-readable medium is provided according to claim 7.

In a first aspect of the present invention, a method for processing an image is provided. The method comprises the steps:
Acquiring a first image comprising a plurality of pixels;
Acquiring a coordinate of at least one defective pixel of the first image;
Prefilling the first image by setting the at least one defective pixel to a pre-fixed value;
Determining pixel value for the at least one defective pixel by a neural work;
Outputting a second image by setting the pixel value of the at least one defective pixel to the determined pixel value.

Thus, in accordance with the present invention, a first image comprising a plurality of pixels is acquired. Preferably, the first image is a raw image. A raw image contains minimally processed data from the image sensor of either a digital camera, a motion picture film scanner, or other image scanners.

Subsequently, the coordinate of at least one defective pixel of the first image is acquired. The method for acquiring the coordinates of the defective pixels is not limited. Preferably, the coordinates are acquired by utilizing a detection algorithm that identifies the defective pixels and/or acquired by pre-characterizing their locations. The pre-characterization can be done based on measurements when the sensor was manufactured. Results of those measurements can be stored in the non-volatile memory on the sensor (sample specific). Alternatively, higher-order analysis can be used to find the defective pixels gradually. For example, one may analyze consecutive frames (e.g., from a video) and identify pixels that remain spatially constant. It will be understood that any detection algorithm which may output the coordinate of the defective pixel is enough for implementing this step.

Subsequently, the first image is prefilled by setting the at least one defective pixel to a pre-fixed value. Thus, the value of the defective pixels will not be mixed with the rest of the pixel values.

Thereafter, pixel value for the at least one defective pixel is determined by a neural network. Therefore, the functionality of defect pixel correction can be implemented within another ISP module that is built based on a neural network. Alternatively, the neural network might be a standalone model that is only trained to reconstruct the defective pixels. Preferably, for the standalone model, the input is the ground-truth raw image with the simulated defective pixels.

Similar to the prefilling step, the defective pixels can be simulated by randomly setting a certain number (e.g., 0.5%) of pixels in the input image to the pre-fixed value (e.g., 0.0) during training. This obviates the need for running a conventional defect pixel correction algorithm, resulting in faster processing speed.

Finally, a second image is output by setting the pixel value of the at least one defective pixel to the determined pixel value. Thus, according to the present invention, combining the prefilling step with the neural network generates better reconstructions than conventional algorithms of defect pixel correction.

Preferably, the pre-fixed value is an invalid pixel value. Therein, the invalid pixel value is an arbitrary value that is not present in the actual data. For example, 0.0. The minimum valid pixel value is the pedestal, and the arbitrary pre-fixed value which is chosen is not a valid pixel value so that the defective pixels will not get mixed with the rest.

Preferably, the pre-fixed value is the same for all the defective pixels. Although different types of defective pixels may exhibit different properties, the defective pixels are not differentiated, and the same arbitrary pre-fixed value is used for all the defective pixels so that the prefiling step is simplified while keeping a high quality of the correction.

Preferably, the neural network is a standalone model or a multi-task model. Therein, the neural network is not limited. The neural network might be a standalone model that is only trained to reconstruct the defective pixels. Preferably, for the standalone model, the input is the ground-truth raw image with the simulated defective pixels. Similar to the prefilling step, the defective pixels can be simulated by randomly setting a certain number (e.g., 0.5%) of pixels in the input image to the pre-fixed value (e.g., 0.0) during training. Alternatively, the neural network might be a multi-task model that is initially trained to perform other tasks. For example, for performing noise reduction. For such a multi-task model, the input is the noisy raw image with the simulated defective pixels. The ground-truth raw image does not have degradations. The model is optimized to reconstruct the defective pixels, e.g., minimizing the mean absolute error between the predicted and ground-truth raw images.

In an aspect of the present invention, an image processing device is provided preferably implemented in a mobile terminal or a camera. The image processing device comprises a processor and memory storage storing instruction which when executed by the processor perform the steps of any of the methods described above. The image processing device can be an Image Signal Processor, a Neural Processing Unit, or a Digital Signal Processor, etc. It can be either standalone or a part of a SoC (System on a Chip).

In an aspect of the present invention, a computer program is provided. The computer program comprises instructions to cause the image processing device as described above to execute the steps of the method according to any of the methods described above.

In an aspect of the present invention a computer-readable medium is provided. The computer-readable medium has stored thereon the computer program described above.

### FIGURES

In the following, the present invention is described in more detail with reference to the accompanying figures.

The figures show:
- Figure 1: a flow diagram of a method according to the present invention
- Figure 2: an example of an ISP pipeline
- Figure 3: an overview according to the present invention
- Figure 4A and 4B: a first example of comparison result
- Figure 5A and 5B: a second example of comparison result
- Figure 6A and 6B: a third example of comparison result
- Figure 7: an image processing device according to the present invention

### Detailed Description

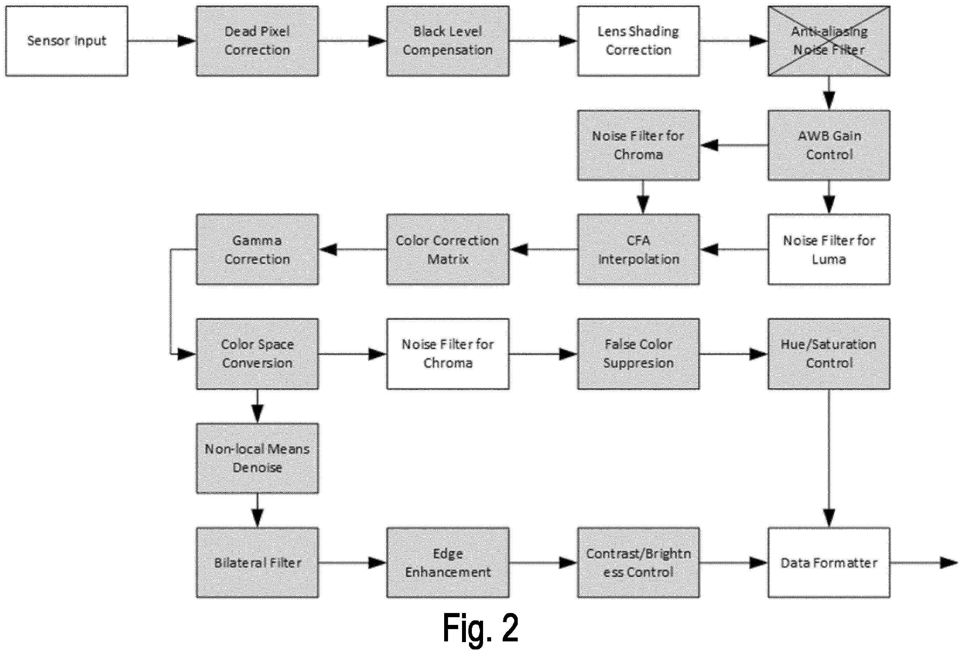

Defect pixel correction is an essential component in any camera ISP. The defect pixel correction module replaces the defective pixels with proper values so that the defective pixels would not degrade image quality. An example of an ISP pipeline is shown in Figure 2 which is used in openISP project.

Conventional algorithms of defect pixel correction are typically manually defined without utilizing techniques in machine learning. It is an objection of the present invention to address at least two challenges:
- Improve the visual quality of the reconstructions using machine learning. A neural network is optimized to perform defect pixel correction by learning from simulated data.
- In the case that the existing ISP pipeline already includes a neural network, it is feasible to implement the functionality of defect pixel correction within the neural network in question. As a result, there is no need to run a conventional defect pixel correction algorithm nor a standalone model for defect pixel correction, and the processing speed would be faster.

The present invention relates to a method for image processing. More particularly, the present invention relates to a method for correcting defective pixels and an image processing device implementing such a method. A computer program and a computer-readable medium are also provided.

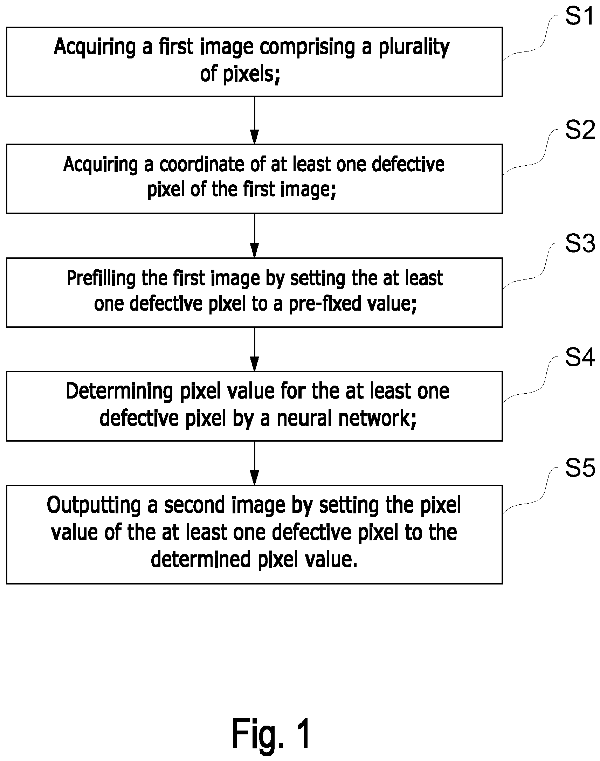

Referring to Figure 1 showing the method for image processing.

In step S1, a first image comprising a plurality of pixels is acquired. Preferably, the first image is a raw image. A raw image contains minimally processed data from the image sensor of either a digital camera, a motion picture film scanner, or other image scanners.

In step S2, the coordinate of at least one defective pixel of the first image is acquired. The method for acquiring the coordinates of the defective pixels is not limited. Preferably, the coordinates are acquired by utilizing a detection algorithm that identifies the defective pixels and/or acquired by pre-characterizing their locations.

In step S3, the first image is prefilled by setting the at least one defective pixel to a pre-fixed value. Thus, the value of the defective pixels will not be mixed with the rest of the pixel values.

In step S4, pixel value for the at least one defective pixel is determined by a neural network. Therefore, the functionality of defect pixel correction can be implemented within another ISP module that is built based on a neural network. Alternatively, the neural network might be a standalone model that is only trained to reconstruct the defective pixels. Preferably, for the standalone model, the input is the ground-truth raw image with the simulated defective pixels. Similar to the prefilling step, the defective pixels can be simulated by randomly setting a certain number (e.g., 0.5%) of pixels in the input image to the pre-fixed value (e.g., 0.0) during training. This obviates the need for running a conventional defect pixel correction algorithm, resulting in faster processing speed.

In step S5, a second image is output by setting the pixel value of the at least one defective pixel to the determined pixel value. Thus, according to the present invention, combining the prefilling step with the neural network generates better reconstructions than conventional algorithms of defect pixel correction.

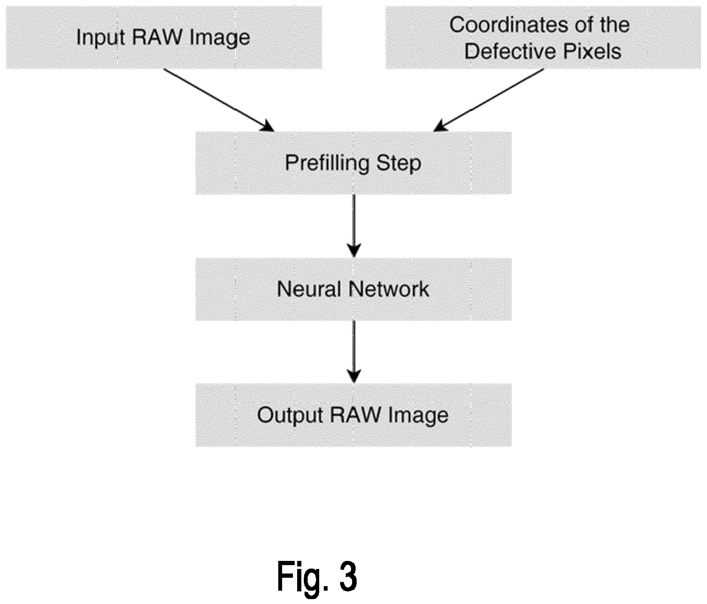

Referring to Figure 3 showing an overview of the present invention. Given the input raw image, an assumption is made that the coordinates of the defective pixels are known. Such information can be obtained by utilizing a detection algorithm that identifies the defective pixels, or by pre-characterizing their locations, or a combination of these two. In addition, the source of the detection results is not limited, and it could be an ISP block or the camera itself.

Since the coordinates of the defective pixels are known, a prefilling step is introduced at the beginning. It sets the defective pixels to an arbitrary value (e.g., 0.0) that is not present in the actual data. While different types of defective pixels may exhibit different properties, preferably they are not differentiated among defective pixels according to the present invention, and the same arbitrary value might be used for all. The minimum valid pixel value is the pedestal, and the arbitrary value that is chosen is not a valid pixel value so that the defective pixels will not get mixed with the rest of the pixels. The defective pixels are marked by setting them to the arbitrary value, while the arbitrary value could be different from the actual pixel value that a defective pixel might show. On the other hand, the detection algorithm is expected to identify defective pixels. Having false-positive cases (i.e., incorrectly indicating the presence of a defective pixel) does not increase the processing time of the correction algorithm, while the quality of the resulting images should not degrade noticeably.

It will be understood that the pixels set to an arbitrary value do not necessarily need to be defects, but any pixels that are to be replaced/reconstructed by the network. The correction solution is agnostic to the root cause that leads to marking the pixels with an arbitrary non-pixel value.

Subsequently, a neural network may be appended to correct the defective pixels. In some embodiments, the PMRID architecture has been adopted which is hereby incorporated by reference: Yuzhi Wang et al: "Practical Deep raw Image Denoising on Mobile Devices". It will be understood that any image-to-image model would be sufficient. It can be a standalone model that is only trained to reconstruct the defective pixels or a multi-task model that is initially trained to perform other auxiliary tasks such as noise reduction. Similar to the prefilling step, the defective pixels can be simulated by randomly setting a certain number (e.g., 0.5%) of pixels in the input image to the pre-fixed value (e.g., 0.0) during training. For the standalone model, the input might be the ground-truth raw image with the simulated defective pixels. For the multi-task model, the input might be the noisy raw image with the simulated defective pixels. The ground-truth raw image does not have degradations. The model is optimized to reconstruct the defective pixels, e.g., minimizing the mean absolute error between the predicted and ground-truth raw images.

Finally, the results of the experiments are presented with the figures. The baseline and baseline_with_dpc models refer to the noise reduction models trained without and with the simulated defective pixels, respectively.

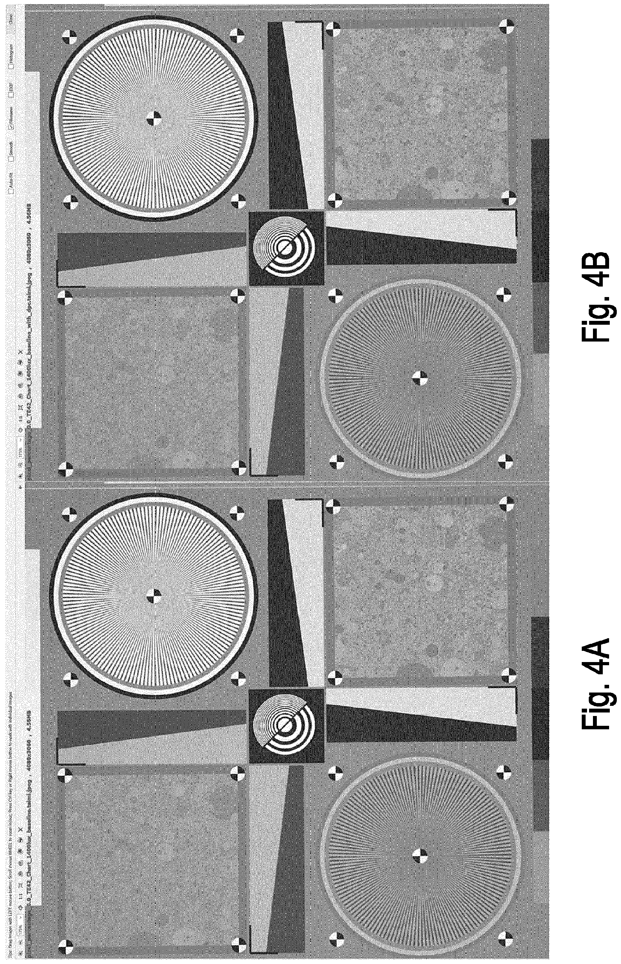

If no defective pixels are present in the test image, Figure 4A and Figure 4B are comparable. Hence, adding simulated defective pixels during training does not degrade image quality.

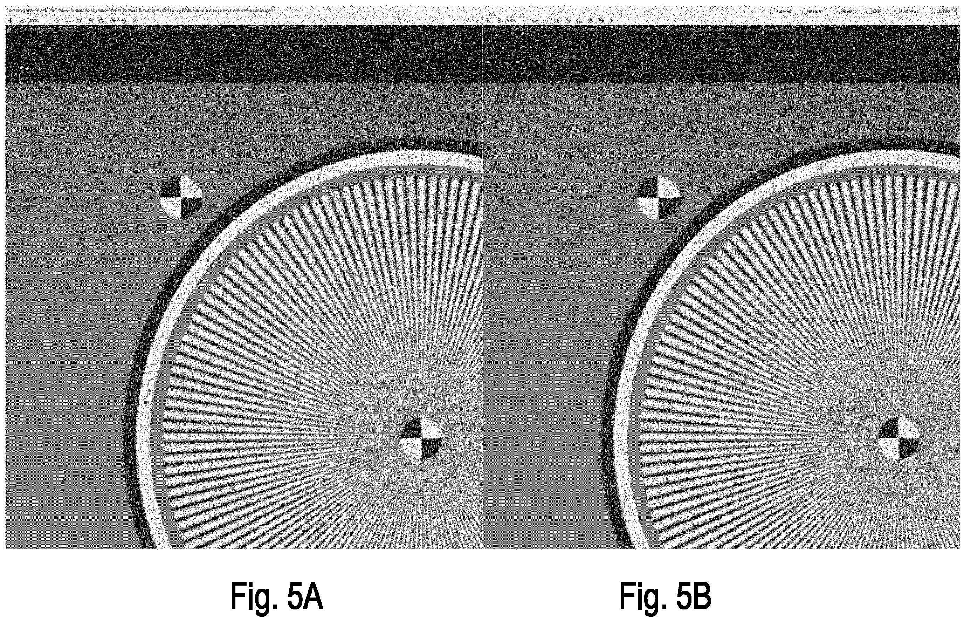

If defective pixels are present in the test image and the baseline/baseline_with_dpc model is used, the defective pixels can be reconstructed using baseline_with_dpc (see Figure 5A and Figure 5B). In the previous experiments, the conventional DPC method could not properly process some of the regions.

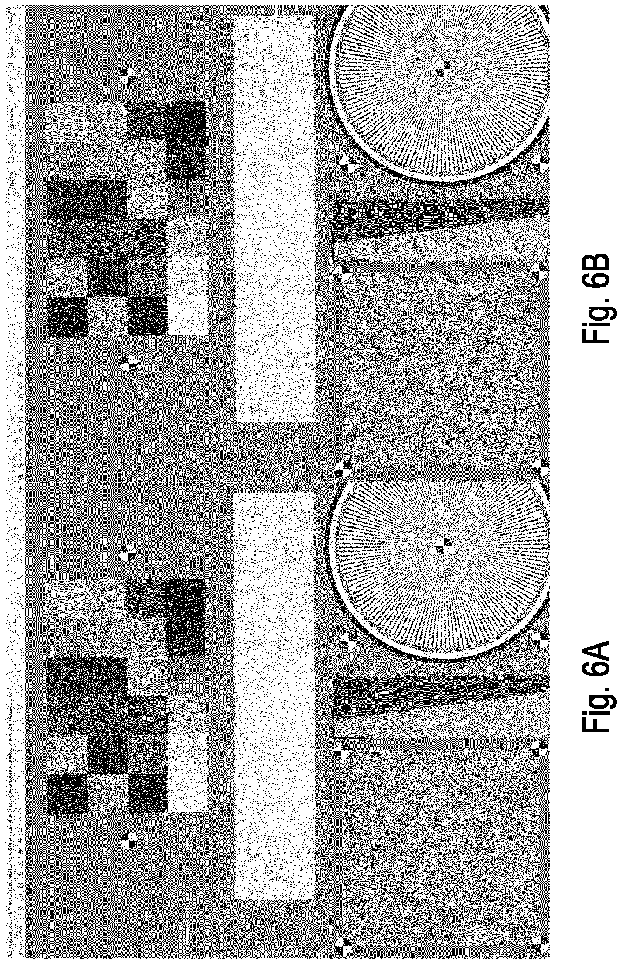

Optionally, the proposed method according to the present invention can also be utilized together with other DPC methods. For example, a conventional DPC method can be applied to correct the easy cases of defective pixels, while the proposed method handles the remaining hard cases. The proposed method has been validated with the following conventional DPC method, which utilizes the normal pixels neighboring a defective pixel. The defective pixels in each color channel are handled separately. After locating one specific defective pixel, all pixels inside the corresponding MxN (e.g., 3x3) block are found. The normal pixels in the block can be separated out, while the subsequent steps will be applied only if the number of the normal pixels is greater than or equal to a pre-defined threshold T (e.g., 4). On the one hand, the standard deviation of the block can be derived using the noise model of the camera and the mean value of the normal pixels. On the other hand, the difference between the second-smallest and the second-largest normal pixels is calculated. If the difference is smaller than the standard deviation multiplied by a factor F (e.g., 3), the defective pixel in question is considered an easy case, and it is replaced by the median value of the normal pixels. Note that the supplementary DPC method is not limited to the method mentioned above, and other DPC methods would also work. In the example of Figure 6A and Figure 6B, the resulting image is indistinguishable from the case in which no defective pixels are present.

According to the present invention, the problem of correcting defective pixels in raw images is addressed. More specifically, the method comprises two major components. On the one hand, the defective pixels are set to an arbitrary value in the prefilling step. On the other hand, the defective pixels get corrected by a neural network, which is trained with the simulated defective pixels. In the case that there is already a neural network (e.g., a noise reduction model) in the ISP, adding support for DPC can be achieved by modifying the training data without requiring extra computations during inference. As a result, the conventional DPC method can be removed while the reconstructions of the defective pixels are better.

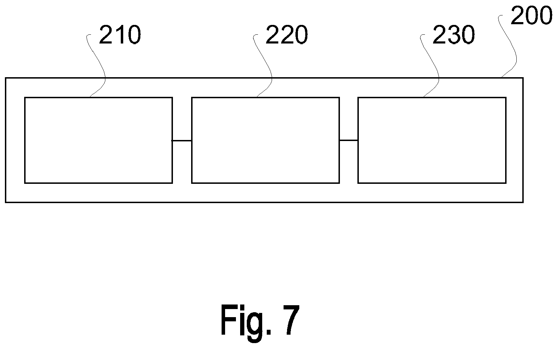

Referring to Figure 7, showing a device such as a terminal device 200 including a camera sensor or image sensor 210 which is connected to a processor 220. Further, the processor 220 is connected to a memory storage 230. The memory storage 230 might store instructions to be performed by the processor 220 to transform the raw image data captured by the image sensor 210 and provide the final image to a user of the terminal device 200. Therein, the processor 220 and memory 230 can be implemented as a dedicated image processor implementing the ISP in hardware or can implement the ISP in software stored in the storage memory 230 processed by the processor 220.

In summarizing, there are three major advantages of the present invention:
- Compared with manually defined algorithms of defect pixel correction, the present invention is based on machine learning, and the reconstructions of the defective pixels are better.
- It is costless to add support for performing defect pixel correction within an existing ISP module that contains a neural network. Consequently, we can discard the conventional defect pixel correction algorithm, and the computational cost would be reduced.
- The correction algorithm is agnostic to the source of marked pixels, allowing it to correct any pixel which is not necessarily defective. The decision on what to replace is left to the detection algorithm.

Certain adaptations and modifications of the described embodiments can be made. Therefore, the above-discussed embodiments are considered to be illustrative and not restrictive. In particular, embodiments can be freely combined.

## Claims

1. A method for processing an image, including:
Acquiring a first image comprising a plurality of pixels;
Acquiring a coordinate of at least one defective pixel of the first image;
Prefilling the first image by setting the at least one defective pixel to a pre-fixed value;
Determining pixel value for the at least one defective pixel by a neural network;
Outputting a second image by setting the pixel value of the at least one defective pixel to the determined pixel value.

2. Method according to claim 1, wherein the pre-fixed value is an invalid pixel value.

3. Method according to claim 1 or 2, wherein the pre-fixed value is the same for all the defective pixels.

4. Method according to any of claims 1 to 3, wherein the neural network is a standalone model or a multi-task model.

5. An image processing device comprising a processor and a memory storage storing instruction which when executed by the processor perform the steps of the method according to any of claims 1 to 4.

6. A computer program comprising instructions to cause the image processing device of claim 5 to execute the steps of the method according to any of claims 1 to 4.

7. A computer-readable medium having stored thereon the computer program of claim 6.
